# EUROPEAN PATENT SPECIFICATION

(11) **EP 4 329 950 B1**
(45) Date of publication and mention of the grant of the patent: **26.03.2025**
(21) Application number: 22716443.1
(22) Date of filing: 06.04.2022
(51) Int. Cl.: B07B 1/00, B07B 13/16, B65G 11/14, B02C 23/08

(54) **DIVIDING HOPPER AND TRANSPORTABLE SCREENING APPARATUS**
TEILTRICHTER UND TRANSPORTABLE SIEBVORRICHTUNG
TRÉMIE DE SÉPARATION ET APPAREIL DE CRIBLAGE TRANSPORTABLE

(30) Priority: 26.04.2021 IN 202111019069
(43) Date of publication of application: 06.03.2024
(73) Proprietor: Metso Finland Oy, 02230 Espoo (FI)
(72) Inventor: SHARMA, Jasvinder, Karnal Haryana (IN)
(74) Representative: Espatent Oy
(86) International application number: PCT/FI2022/050221
(87) International publication number: WO 2022/229499

(56) References cited:
- WO-A1-2019/215387
- WO-A1-2020/047131
- CA-A1- 2 592 698
- CN-A- 108 655 005
- GB-A- 2 427 158
- GB-A- 2 523 658
- US-A- 4 572 782
- US-A- 4 598 875

## Description

### TECHNICAL FIELD

The present disclosure generally relates to a dividing hopper and transportable screening apparatus.

### BACKGROUND

This section illustrates useful background information without admission of any technique described herein representative of the state of the art.

A mobile screen for mineral material can be implemented as a trailer to be towed by a truck. To this end, the mobile screen can be pivotably moved between an operating position and transport position in which the screen is compacted in order to meet transport dimensions.

The screen can be motorized to shake mineral material down along and through the screen so as to separate fractions of different dimensions. One or more screen decks can be vibrated through a screen frame to which screen meshes are attached. The screen frame itself can be vibrated by a vibrator, such as a motor that rotates an eccentric mass. When resiliently supported, e.g., by springs, the screen moves under vibration effect back and forth so that mineral material covering the screen passes through or along the screen towards the front end of the screen for subsequent in-line crushing or conveying for further processing or use.

A mobile screen is typically implemented with a two-tier frame system comprising a platform chassis and a screen support frame that carries the screen, a crusher (if provided) and any conveyors. The processing equipment frame is pivoted to the platform frame and moved between the operating and transport positions by hydraulic rams. In order to support the screen more robustly, the platform frame is supported by legs against ground and supports maintain the screen support frame in its correct position above the platform frame, e.g., by beams fixed between the platform and screen support equipment frames.

Mobile screens conveniently enable transport, for example, by roads and railroads. However, to this end, the plants typically require an effort for adopting a transport state of sufficiently narrow, low, and short dimensions. For example, the screening apparatus can be pivoted upward for screening and down onto a body for transport.

A multideck screen outputs plural fractions that should be conveyed to separate piles or further processes. To this end, dividing hoppers can be used to divide different fractions to convenient positions for further conveying by conveyors, for example. In an implementation, removable chutes enable passing the outputs of the dividing hopper to such convenient positions. However, the chutes must be manually removed and separately transported or otherwise carried along. Moreover, due to the manual handling requirement, the chutes could be crushed between moving parts, if not removed before lowering a screen, for example.

Background art is disclosed in publications WO 2019/215387 A1, which discloses the preamble of claim 1, US 4 598 875 A.

GB 2 427 158 A, and US 4 572 782 A.

It is an object of the present invention to avoid or mitigate disadvantages of the prior art, or to at least provide a new technical alternative.

### SUMMARY

The appended claims define the scope of protection. Any examples and technical descriptions of apparatuses, products and/or methods in the description and/or drawings not covered by the claims are presented not as embodiments of the invention but as background art or examples useful for understanding the invention.

According to a first example aspect there is provided a transportable mineral material processing system, comprising:
a screen support frame configured to receive and support a multideck screen that comprises a plurality of stacked screen decks configured to output different size fractions at a discharge end of the screen decks;
a dividing hopper comprising a reception configured to receive from the multideck screen, when installed, the output different size fractions and further comprising a chute configured to guide at least one of the different size fractions to a chute output position; and
a platform frame configured to movably support the screen support frame so that the screen support frame and the multideck screen are movable between an elevated operating position and to a lowered transport position;
wherein the chute output position laterally resides outside a lateral footprint bordered by the platform frame; and
wherein the system further comprises means for moving the chute between a chute transport state and a chute operating state so that at least a portion of a weight of the chute is carried by the dividing hopper in and between these states.

The lateral footprint comprises the region defined by structural parts of the platform frame and any intermediate area between the structural parts.

The chute may be further configured to be connected to the dividing hopper in both the chute transport state and the chute operating state. The chute may be further configured to be connected to the dividing hopper in both the chute transport state and the chute operating state and in between these states.

The chute may be telescopically movable. The chute may comprise two parts. The chute may comprise a fixed part attached to the dividing hopper or to the screen support frame. The chute may comprise a movable part that is telescopically movable along the fixed part.

The chute may be pivotably movable.

The chute output position may be adjustable.

The chute may be lockable to the operating state. The chute may be lockable to the operating state with a lock pin.

The chute may be configured to move from the transport state to the chute operating state over the platform frame.

The chute may be configured to move from the transport state to the chute operating state under the platform frame.

The transportable mineral material processing system may comprise a chute retraction mechanism configured to move the chute from the chute operating state to the chute transport state on moving the screen support frame to the lowered transport position. The chute retraction mechanism may comprise a resilient biasing element configured to create a retraction force for retracting the chute. The resilient biasing element may comprise a spring. The resilient biasing element may comprise a weight. The chute retraction mechanism may be automatic.

The transportable mineral material processing system may comprise a chute extraction mechanism configured to move the chute from the chute transport state to the chute operating state on moving the screen support frame to the elevated operating position. The chute extraction mechanism may be automatic.

The transportable mineral material processing system may comprise a first pulling member configured to move the chute from the operating position to the transport position on moving the screen support frame from the operating position to the transport position. The first pulling member may comprise a string. The first pulling member may comprise a chain. The first pulling member may comprise a flexible band.

The transportable mineral material processing system may comprise a second pulling member configured to move the chute from the operating position to the transport position on moving the screen support frame from the operating position to the transport position.

The second pulling member may comprise a string. The second pulling member may comprise a chain. The second pulling member may comprise a flexible band.

The transportable mineral material processing system may comprise two or more of the chutes. The screening apparatus may comprise more than three of the chutes. Different ones of the two or more chutes may be configured to guide different ones of the different size fractions. Different ones of the two or more chutes may have respective different chute output positions.

The dividing hopper may be supported by the screen support frame.

The platform frame may be made of steel plate. The platform frame may comprise a plurality of legs. The plurality of legs may be made of steel plate.

The screen support frame may be made of steel plate.

The transportable mineral material processing system may comprise a mobile mineral material processing plant.

The transportable mineral material processing system may comprise the multideck screen attached to the screen support frame. The multideck screen may comprise more than two screen decks.

The transportable mineral material processing system may comprise a wheel base for towable movement of the transportable screening system.

The transportable mineral material processing system may comprise a skid base for towable movement of the transportable screening system.

The transportable mineral material processing system may comprise a wheel base for self-propelling movement of the transportable screening system.

The transportable mineral material processing system may comprise a track base for self-propelling movement of the transportable screening system.

The transportable mineral material processing system may comprise a crusher. The crusher may be a cone crusher. The crusher may be a gyratory crusher. The crusher may be a jaw crusher.

According to a second example aspect there is provided a method for adapting a mineral material crushing system between operating and transport configurations, comprising:
receiving and supporting by a screen support frame a multideck screen that comprises a plurality of stacked screen decks configured to output different size fractions at a discharge end of the screen decks;
receiving by a dividing hopper different size fractions from the multideck screen and guiding by a chute the different size fractions and to a chute output position;
movably supporting by a platform frame the screen support frame so that the screen support frame and the multideck screen are movable between an elevated operating position and to a lowered transport position;
wherein the chute output position laterally resides outside a lateral footprint bordered by the platform frame;
providing movement of the chute between a chute transport state and a chute operating state so that at least a portion of a weight of the chute is carried by the dividing hopper in and between these states.

Different non-binding example aspects and embodiments have been illustrated in the foregoing. The embodiments in the foregoing are used merely to explain selected aspects or steps that may be utilized in different implementations. Some embodiments may be presented only with reference to certain example aspects. It should be appreciated that corresponding embodiments may apply to other example aspects as well.

### BRIEF DESCRIPTION OF THE FIGURES

Some example embodiments will be described with reference to the accompanying figures, in which:
Fig. 1 shows a side view of a mobile mineral material processing system according to an embodiment in an operating position;
Fig. 2 shows a perspective view of a mobile mineral material processing system of an embodiment;
Figs. 3 and 4 show details of a dividing hopper of an embodiment in an operating state;
Figs. 5 and 6 show details of a dividing hopper of an embodiment in a transport state;
Figs. 7 and 8 show details of a telescopic chute in the transport state; and
Fig. 9 shows details of the telescopic chute in the operating state.

### DETAILED DESCRIPTION

In the following description, like reference signs denote like elements or steps.

### DETAILED DESCRIPTION

In the following description, like reference signs denote like elements or steps.

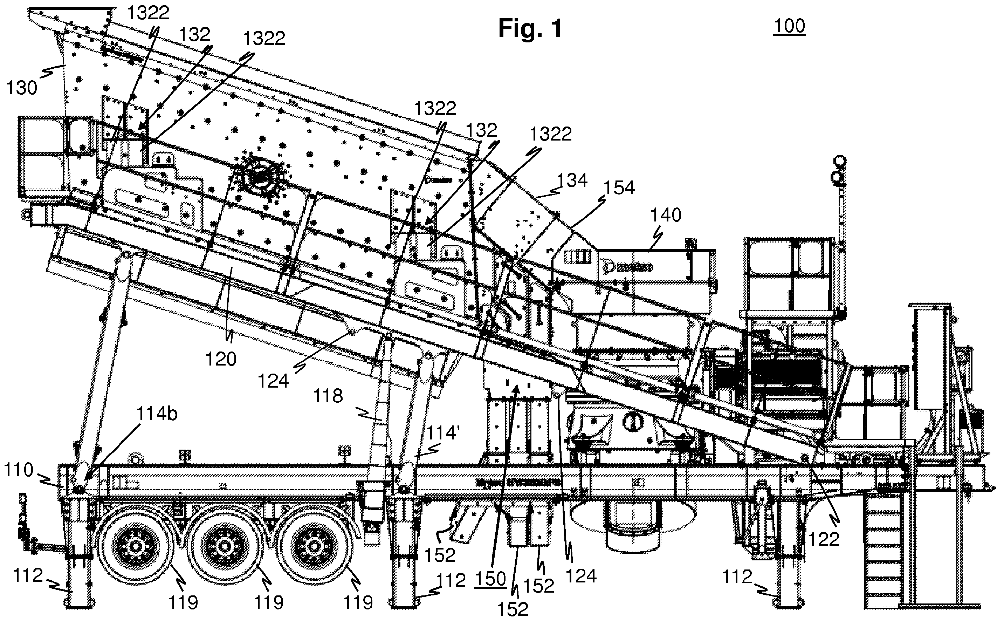

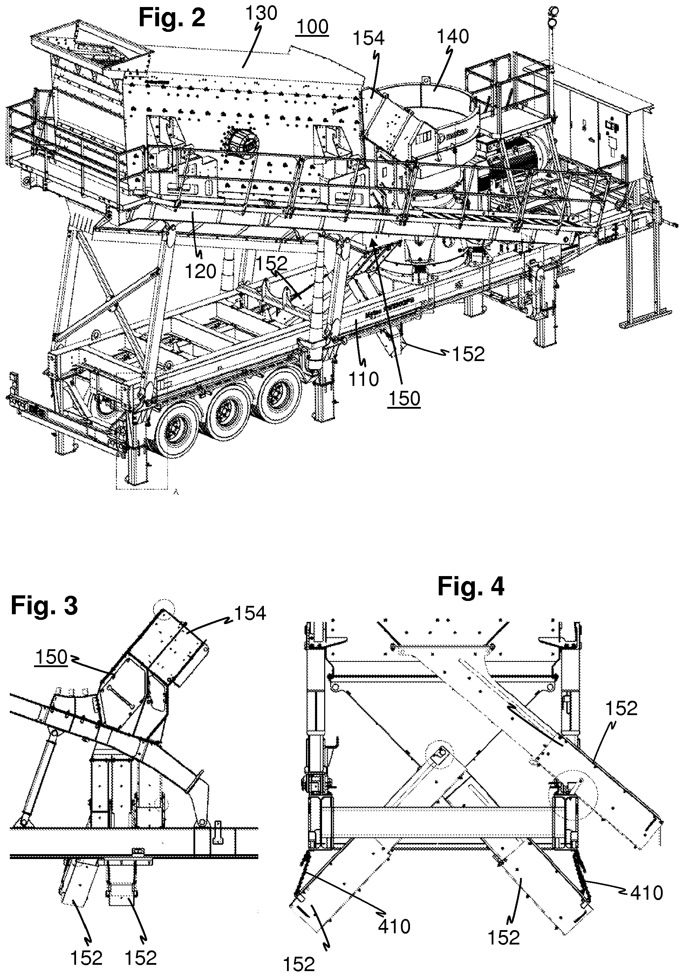

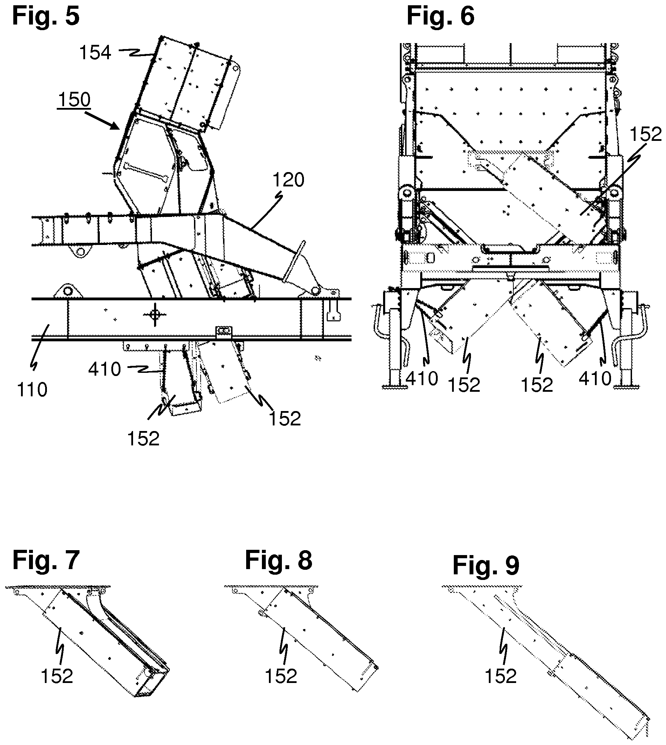

Fig. 1 shows a side view of a mobile drawing of a mobile mineral material processing system 100 according to an embodiment of the invention. The mineral material processing system 100 comprises a screen support frame 120 configured to receive and support a multideck screen 130 that comprises a plurality of stacked screen decks configured to output different size fractions at a discharge end of the screen decks. The system 100 further comprises a dividing hopper 150 comprising a reception configured to receive from the multideck screen, when installed, the output different size fractions and further comprising a chute 152 (three chutes 152 visible in Fig. 1) configured to guide the different size fractions and to respective chute output position. Fig. 1 further shows a platform frame 110 configured to movably support the screen support frame 120 so that the screen support frame 120 and the multideck screen 130 are movable between an elevated operating position and to a lowered transport position. The chute output position laterally resides outside a lateral footprint bordered by the platform frame 110. The chute 152 is movable between a chute transport state (see Fig. 6) and a chute operating state (See Fig. 4) so that at least a portion of a weight of the chute 152 is carried by the dividing hopper 150 in and between these states.

Fig. 1 further shows a plurality of legs 112 for supporting the platform frame 110 to ground (e.g., for sturdy supporting of the mobile screen body when operating any equipment attached to the mobile screen body, such as a screen and/or crusher).

In an embodiment, lifting equipment is provided for moving the screen support frame 120 between the transport position and the operating position. The lifting equipment comprise, for example, at least one hydraulic ram 118. The at least one hydraulic ram can be telescopic such that the ram can achieve sufficient extension length while not extending obtrusively low in the transport position.

The upwards inclining angle of the screen support frame 120 can be, for example, greater than 10 degrees and/or less than 20 degrees.

In Fig. 1, the screen support frame 120 is shown movably supported by the platform frame 110 using a pivot joint 122.

The legs 112 can be made extendable, e.g., hydraulically or by manual action. The platform frame 110 can be equipped with wheel suspension for a plurality of wheels 119. The suspension can be made retractable and expandable by machine operation for transferring weight of the mobile screen body from the wheels 119 to the legs 112 and back to the wheels 119.

While Fig. 1 shows wheels 119, the platform frame 110 can be additionally or alternatively equipped with crawler tracks. In an embodiment, the platform frame 110 also comprises a crawler track suspension for one or more crawler tracks, which crawler track suspension is retractable and expandable by machine operation. The platform frame 110 can be equipped with an engine unit to provide self-propelling capability.

Various parts of the structures can be made of steel plate, including, for example, partially or entirely any one or more of the following: platform frame 110; the legs 112; the screen support frame 120; and the dividing hopper 150.

The screen 130 can be attached to the screen support frame 120 via a plurality of spring groups 132 each comprising one or more springs 1322.

In an embodiment, the mobile mineral material processing system 100 further comprises a crusher 140 attached to the platform frame 110, such as a cone crusher, an impact crusher, or a jaw crusher. The mobile mineral material processing system 100 further comprises in an embodiment a feed 134 such as a channel or conveyor for supplying an oversize fraction of the screen 130 or screening produced by the screen 130 to the crusher 140.

The mobile mineral processing system 100 is constructed in an embodiment to be transportable as a semi-trailer.

The chute 152 of an embodiment is connected to the dividing hopper in both the chute transport state and the chute operating state. Moreover, the chute 152 may remain connected to the dividing hopper 150 in both the chute transport state and the chute operating state while transitioning between these states.

As shown in Figs. 8 and 9 in particular, the chute 152 can be made telescopically movable. In that embodiment, the chute 152 comprises two parts. Alternatively, the chute 152 may comprise a fixed part attached to the dividing hopper 150 or to the screen support frame 120. In an embodiment, the chute 152 comprises a movable part that is telescopically movable along the fixed part.

In an alternative embodiment (not shown), the chute 152 is pivotably movable in alternative or addition to the telescopic movement.

In an embodiment, the chute output position is adjustable. This may help aligning a subsequent conveyor with the chute output position, for example.

In an embodiment, the chute 152 is lockable to the operating state using, for example, a lock pin that, for example, passes through two mutually movable telescopic parts of the chute 152.

In an embodiment, the chute 152 is configured to move from the transport state to the chute operating state over the platform frame 110.

In an embodiment, the chute 152 is configured to move from the transport state to the chute operating state under the platform frame 110.

With more than one chutes 152, some of the chutes 152 may be different by structure and / or alignment with relation to the platform frame 110. Different ones of two or more chutes 152 may be configured to guide different ones of the different size fractions. Different ones of the two or more chutes 152 may have respective different chute output positions.

In an embodiment, the transportable mineral material processing system 100 comprises a chute retraction mechanism configured to move the chute 152 from the chute operating state to the chute transport state on moving the screen support frame to the lowered transport position. In an embodiment, the chute retraction mechanism comprises a resilient biasing element configured to create a retraction force for retracting the chute 152. The resilient biasing element may comprise a spring. The resilient biasing element may comprise a weight.

In an embodiment, the transportable mineral material processing system 100 comprises a chute extraction mechanism configured to move the chute 152 from the chute transport state to the chute operating state on moving the screen support frame to the elevated operating position.

In an embodiment, the transportable mineral material processing system 100 comprises a first pulling member configured to move the chute 152 from the operating position to the transport position on moving the screen support frame from the operating position to the transport position. In an embodiment, the first pulling member comprises a string. In an embodiment, the first pulling member comprises a chain. In an embodiment, the first pulling member may comprises flexible band.

In an embodiment, the transportable mineral material processing system 100 comprises a second pulling member configured to move the chute 152 from the operating position to the transport position on moving the screen support frame from the operating position to the transport position. The second pulling member may comprise a string. The second pulling member may comprise a chain. The second pulling member may comprise a flexible band.

In an embodiment, the dividing hopper 150 is supported by the screen support frame.

In an embodiment, the platform frame 110 is made of steel plate. The plurality of legs 112 may be made of steel plate.

In an embodiment, the screen support frame 120 may be made of steel plate.

In an embodiment, the transportable mineral material processing system 100 comprises a mobile mineral material processing plant.

There is also provided a method for adapting a mineral material crushing system between operating and transport configurations. The method comprises any one or more of:
receiving and supporting by a screen support frame a multideck screen that comprises a plurality of stacked screen decks configured to output different size fractions at a discharge end of the screen decks;
receiving by a dividing hopper different size fractions from the multideck screen and guiding by a chute the different size fractions and to a chute output position;
movably supporting by a platform frame the screen support frame so that the screen support frame and the multideck screen are movable between an elevated operating position and to a lowered transport position;
wherein the chute output position laterally resides outside a lateral footprint bordered by the platform frame; and / or
providing movement of the chute between a chute transport state and a chute operating state so that at least a portion of a weight of the chute is carried by the dividing hopper in and between these states.

Various embodiments have been presented. It should be appreciated that in this document, words comprise, include, and contain are each used as open-ended expressions with no intended exclusivity.

The foregoing description has provided by way of non-limiting examples of particular implementations and embodiments a full and informative description of the best mode presently contemplated by the inventors for carrying out the invention. It is however clear to a person skilled in the art that the invention is not restricted to details of the embodiments presented in the foregoing, but that it can be implemented in other embodiments using equivalent means or in different combinations of embodiments without deviating from the characteristics of the invention.

Furthermore, some of the features of the afore-disclosed example embodiments may be used to advantage without the corresponding use of other features. As such, the foregoing description shall be considered as merely illustrative of the principles of the present invention, and not in limitation thereof. Hence, the scope of the invention is only restricted by the appended patent claims.

## Claims

1. A transportable mineral material processing system (100), comprising:
a screen support frame (120) configured to receive and support a multideck screen (130) that comprises a plurality of stacked screen decks configured to output different size fractions at a discharge end of the screen decks;
a dividing hopper (150) comprising a reception (154) configured to receive from the multideck screen (130), when installed, the output different size fractions and further comprising a chute (152) configured to guide at least one of the different size fractions to a chute output position; and
a platform frame (110) configured to movably support the screen support frame (120) so that the screen support frame (120) and the multideck screen (130) are movable between an elevated operating position and to a lowered transport position;
**characterised in that**
the chute output position laterally resides outside a lateral footprint bordered by the platform frame (110); and
**in that** the system further comprises means for moving the chute (152) between a chute transport state and a chute operating state so that at least a portion of a weight of the chute (152) is carried by the dividing hopper in and between these states.

2. The transportable mineral material processing system (100) of claim 1, wherein the chute (152) is further configured to be connected to the dividing hopper in both the chute transport state and the chute operating state.

3. The transportable mineral material processing system (100) of claim 1 or 2, wherein the chute (152) is telescopically movable.

4. The transportable mineral material processing system (100) of any one of claims 1 to 3, wherein the chute (152) comprises two parts.

5. The transportable mineral material processing system (100) of claim 4, wherein the chute (152) comprises a fixed part attached to the dividing hopper and a movable part that is telescopically movable along the fixed part.

6. The transportable mineral material processing system (100) of any one of claims 1 to 5, wherein the chute (152) is lockable to the operating state.

7. The transportable mineral material processing system of any one of claims 1 to 6, further comprising a chute retraction mechanism configured to move the chute from the chute operating state to the chute transport state on moving the screen support frame to the lowered transport position.

8. **The** transportable mineral material processing system of any one of claims 1 to 7, further comprising a chute extraction mechanism configured to move the chute from the chute transport state to the chute operating state on moving the screen support frame to the elevated operating position.

9. **The** transportable mineral material processing system of any one of claims 1 to 8, further comprising two or more of the chutes.

10. **The** transportable mineral material processing system of any one of claims 1 to 9, wherein the dividing hopper is supported by the screen support frame.

11. **The** transportable mineral material processing system of any one of claims 1 to 10, further comprising a towing base for towable movement of the transportable screening system.

12. The transportable mineral material processing system of any one of claims 1 to 11, further comprising a support leg base for fixed installation of the transportable screening system.

13. The transportable mineral material processing system of any one of claims 1 to 12, further comprising a track base for self-propelling movement of the transportable screening system.

14. The transportable mineral material processing system of any one of claims 1 to 13, further comprising a crusher.

15. A method for adapting a mineral material processing system (100) between operating and transport configurations, comprising:
receiving and supporting by a screen support frame (120) a multideck screen (130) that comprises a plurality of stacked screen decks configured to output different size fractions at a discharge end of the screen decks;
receiving by a dividing hopper (150) different size fractions from the multideck screen (130) and guiding by a chute (152) the different size fractions to a chute output position;
movably supporting by a platform frame (110) the screen support frame (120) so that the screen support frame (120) and the multideck screen are movable between an elevated operating position and a lowered transport position;
wherein the chute output position laterally resides outside a lateral footprint bordered by the platform frame (110);
providing movement of the chute (152) between a chute transport state and a chute operating state so that at least a portion of a weight of the chute (152) is carried by the dividing hopper (150) in and between these states.

## Patentansprüche

1. Transportables Aufbereitungssystem für mineralisches Material (100), umfassend:
einen Siebträgerrahmen (120), der so konfiguriert ist, dass er ein Mehrdecksieb (130) aufnimmt und trägt, das eine Vielzahl von gestapelten Siebdecks umfasst, die so konfiguriert sind, dass sie an einem Auslassende der Siebdecks Fraktionen unterschiedlicher Größe ausgeben;
einen Trennbehälter (150), umfassend eine Aufnahme (154), die so konfiguriert ist, dass sie von dem Mehrdecksieb (130), wenn es installiert ist, die ausgegebenen Fraktionen unterschiedlicher Größe aufnimmt, und ferner umfassend eine Rinne (152), die so konfiguriert ist, dass sie mindestens eine der Fraktionen unterschiedlicher Größe zu einer Ausgabeposition der Rinne leitet; und
einen Plattformrahmen (110), der so konfiguriert ist, dass er den Siebträgerrahmen (120) beweglich trägt, so dass der Siebträgerrahmen (120) und das Mehrdecksieb (130) zwischen einer erhöhten Betriebsposition und einer erniedrigten Transportposition beweglich sind;
**dadurch gekennzeichnet, dass**
die Ausgabeposition der Rinne seitlich außerhalb einer seitlichen Grundfläche liegt, die durch den Plattformrahmen (110) begrenzt wird; und
dass
das System ferner Mittel zum Bewegen der Rinne (152) zwischen einem Rinnen-Transportzustand und einem Rinnen-Betriebszustand umfasst, so dass zumindest ein Teil eines Gewichts der Rinne (152) in und zwischen diesen Zuständen von dem Trennbehälter getragen wird.

2. Transportables Aufbereitungssystem für mineralisches Material (100) nach Anspruch 1, wobei die Rinne (152) ferner so konfiguriert ist, dass sie sowohl in dem Rinnen-Transportzustand als auch in dem Rinnen-Betriebszustand mit dem Trennbehälter verbunden ist.

3. Transportables Aufbereitungssystem für mineralisches Material (100) nach Anspruch 1 oder 2, wobei die Rinne (152) teleskopartig beweglich ist.

4. Transportables Aufbereitungssystem für mineralisches Material (100) nach einem der Ansprüche 1 bis 3, wobei die Rinne (152) zwei Teile umfasst.

5. Transportables Aufbereitungssystem für mineralisches Material (100) nach Anspruch 4, wobei die Rinne (152) ein feststehendes Teil, das an dem Trennbehälter angebracht ist, und einen bewegliches Teil umfasst, das entlang des feststehenden Teils teleskopartig beweglich ist.

6. Transportables Aufbereitungssystem für mineralisches Material (100) nach einem der Ansprüche 1 bis 5, wobei die Rinne (152) in dem Betriebszustand arretierbar ist.

7. Transportables Aufbereitungssystem für mineralisches Material nach einem der Ansprüche 1 bis 6, ferner umfassend einen Rinnen-Einfahrmechanismus, der so konfiguriert ist, dass er die Rinne aus dem Rinnen-Betriebszustand in den Rinnen-Transportzustand bewegt, wenn der Siebträgerrahmen in die erniedrigte Transportposition bewegt wird.

8. Transportables Aufbereitungssystem für mineralisches Material nach einem der Ansprüche 1 bis 7, ferner umfassend einen Rinnen-Ausfahrmechanismus, der so konfiguriert ist, dass er die Rinne aus dem Rinnen-Transportzustand in den Rinnen-Betriebszustand bewegt, wenn der Siebträgerrahmen in die erhöhte Betriebsposition bewegt wird.

9. Transportables Aufbereitungssystem für mineralisches Material nach einem der Ansprüche 1 bis 8, ferner umfassend zwei oder mehr der Rinnen.

10. Transportables Aufbereitungssystem für mineralisches Material nach einem der Ansprüche 1 bis 9, wobei der Trennbehälter durch den Siebträgerrahmen getragen wird.

11. Transportables Aufbereitungssystem für mineralisches Material nach einem der Ansprüche 1 bis 10, ferner umfassend eine Schleppbasis für Schleppbewegung des transportablen Siebsystems.

12. Transportables Aufbereitungssystem für mineralisches Material nach einem der Ansprüche 1 bis 11, ferner umfassend eine Trägerfußbasis für feste Installation des transportablen Siebsystems.

13. Transportables Aufbereitungssystem für mineralisches Material nach einem der Ansprüche 1 bis 12, ferner umfassend eine Fahrwegbasis für selbstfahrende Bewegung des transportablen Siebsystems.

14. Transportables Aufbereitungssystem für mineralisches Material nach einem der Ansprüche 1 bis 13, ferner umfassend einen Brecher.

15. Verfahren zum Anpassen eines Aufbereitungssystems für mineralisches Material (100) zwischen Betriebs- und Transportkonfigurationen, umfassend:
Aufnehmen und Tragen eines Mehrdecksiebs (130) durch einen Siebträgerrahmen (120), das eine Vielzahl von gestapelten Siebdecks umfasst, die so konfiguriert sind, dass sie an einem Auslassende der Siebdecks Fraktionen unterschiedlicher Größe ausgeben;
Aufnehmen von Fraktionen unterschiedlicher Größe von dem Mehrdecksieb (130) durch einen Trennbehälter (150) und Leiten der Fraktionen unterschiedlicher Größe durch eine Rinne (152) zu einer Ausgabeposition der Rinne;
bewegliches Tragen des Siebträgerrahmens (120) durch einen Plattformrahmen (110), so dass der Siebträgerrahmen (120) und das Mehrdecksieb zwischen einer erhöhten Betriebsposition und einer erniedrigten Transportposition beweglich sind,
wobei die Ausgabeposition der Rinne seitlich außerhalb einer seitlichen Grundfläche liegt, die durch den Plattformrahmen (110) begrenzt wird;
Bereitstellen von Bewegung der Rinne (152) zwischen einem Rinnen-Transportzustand und einem Rinnen-Betriebszustand, so dass zumindest ein Teil des Gewichts der Rinne (152) in und zwischen diesen Zuständen von dem Trennbehälter (150) getragen wird.

## Revendications

1. Un système transportable (100) de traitement de matières minérales, comprenant :
un châssis (120) formant support de tamis, configuré pour recevoir et supporter un tamis à étages multiples (130) qui comprend une pluralité d'étages de tamis empilés configurés pour délivrer en sortie des fractions de tailles différentes à une extrémité de décharge des étages de tamis ;
une trémie de division (150) comprenant une réception (154) configurée, une fois installée, pour recevoir les fractions de tailles différentes délivrées par le tamis à étages multiples (130), et comprenant en outre une goulotte (152) configurée pour guider au moins l'une des fractions de tailles différentes vers une position de sortie de la goulotte ; et
un châssis (110) formant plate-forme, configuré pour supporter de manière mobile le châssis (120) formant support de tamis de sorte que le châssis (120) formant support de tamis et le tamis à étages multiples (130) soient mobiles entre une position de fonctionnement élevée et une position de transport abaissée ;
**caractérisé en ce que**
la position de délivrance de la goulotte est située latéralement à l'extérieur d'une empreinte latérale bordée par le châssis (110) formant plate-forme ; et
**en ce que**
le système comprend en outre des moyens pour déplacer la goulotte (152) entre un état de transport de la goulotte et un état de fonctionnement de la goulotte de sorte qu'au moins une partie d'un poids de la goulotte (152) soit portée par la trémie de division dans ces états et entre ceux-ci.

2. Le système transportable (100) de traitement de matières minérales selon la revendication 1, dans lequel la goulotte (152) est en outre configurée pour être reliée à la trémie de division à la fois dans l'état de transport de la goulotte et dans l'état de fonctionnement de la goulotte.

3. Le système transportable (100) de traitement de matières minérales selon la revendication 1 ou la revendication 2, dans lequel la goulotte (152) est mobile de manière télescopique.

4. Le système transportable (100) de traitement de matières minérales selon l'une quelconque des revendications 1 à 3, dans lequel la goulotte (152) comprend deux parties.

5. Le système transportable (100) de traitement de matières minérales selon la revendication 4, dans lequel la goulotte (152) comprend une partie fixe fixée à la trémie de division et une partie mobile qui est déplaçable de manière télescopique le long de la partie fixe.

6. Le système transportable (100) de traitement de matières minérales selon l'une quelconque des revendications 1 à 5, dans lequel la goulotte (152) est verrouillable dans l'état de fonctionnement.

7. Le système transportable de traitement de matières minérales selon l'une quelconque des revendications 1 à 6, comprenant en outre un mécanisme de rétraction de goulotte configuré pour déplacer la goulotte de l'état de fonctionnement de la goulotte à l'état de transport de la goulotte lors du déplacement du châssis formant support de tamis vers la position de transport abaissée.

8. Le système transportable de traitement de matières minérales selon l'une quelconque des revendications 1 à 7, comprenant en outre un mécanisme d'extraction de goulotte configuré pour déplacer la goulotte de l'état de transport de la goulotte à l'état de fonctionnement de la goulotte lors du déplacement du châssis formant support de tamis vers la position de fonctionnement élevée.

9. Le système transportable de traitement de matières minérales selon l'une quelconque des revendications 1 à 8, comprenant en outre deux ou plusieurs des goulottes.

10. Le système transportable de traitement de matières minérales selon l'une quelconque des revendications 1 à 9, dans lequel la trémie de division est supportée par le châssis formant support de tamis.

11. Le système transportable de traitement de matières minérales selon l'une quelconque des revendications 1 à 10, comprenant en outre une base de remorquage pour un mouvement de remorquage du système transportable de tamisage.

12. Le système transportable de traitement de matières minérales selon l'une quelconque des revendications 1 à 11, comprenant en outre une base de piètement de support pour l'installation fixe du système transportable de tamisage.

13. Le système transportable de traitement de matières minérales selon l'une quelconque des revendications 1 à 12, comprenant en outre une base de chenille pour le mouvement autopropulsé du système transportable de tamisage.

14. Le système transportable de traitement de matières minérales selon l'une quelconque des revendications 1 à 13, comprenant en outre un concasseur.

15. Un procédé d'adaptation d'un système (100) de traitement de matières minérales entre des configurations de fonctionnement et de transport, comprenant :
le fait de recevoir et de supporter par un châssis (120) formant support de tamis un tamis à étages multiples (130) qui comprend une pluralité d'étages de tamis empilés configurés pour délivrer en sortie des fractions de tailles différentes à une extrémité de décharge des étages de tamis ;
le fait de recevoir par une trémie de division (150) des fractions de tailles différentes provenant du tamis à étages multiples (130) et de guider par une goulotte (152) les fractions de tailles différentes vers une position de sortie de la goulotte ;
le fait de supporter de manière mobile par un châssis (110) formant plate-forme le châssis (120) formant support de tamis de sorte que le châssis (120) formant support de tamis et le tamis à étages multiples soient mobiles entre une position de fonctionnement élevée et une position de transport abaissée ;
la position de délivrance de la goulotte est située latéralement à l'extérieur d'une empreinte latérale bordée par le châssis (110) formant plate-forme ;
le fait de prévoir un mouvement de la goulotte (152) entre un état de transport de la goulotte et un état de fonctionnement de la goulotte de sorte qu'au moins une partie d'un poids de la goulotte (152) soit portée par la trémie de division (150) dans ces états et entre ceux-ci.
